(19) Europäisches Patentamt
European Patent Office
Office européen des brevets

(11) **EP 3 236 566 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(51) Int Cl.:
***H02K 49/06*** *(2006.01)*

(21) Anmeldenummer: **17165948.5**

(22) Anmeldetag: **11.04.2017**

(54) **HYSTERESEKUPPLUNG ODER -BREMSE UND DREHMOMENT-JUSTIERVERFAHREN**

HYSTERESIS COUPLING OR BRAKE AND TORQUE ADJUSTMENT METHOD

COUPLEUR OU FREIN À HYSTÉRÉSIS ET PROCÉDÉ D'AJUSTEMENT DE COUPLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2016 DE 102016004687**

(43) Veröffentlichungstag der Anmeldung:
**25.10.2017 Patentblatt 2017/43**

(73) Patentinhaber: **Chr. Mayr GmbH + Co. KG**
**87665 Mauerstetten (DE)**

(72) Erfinder: **FLEISCHMANN, Oskar**
**87666 Pforzen (DE)**

(74) Vertreter: **Ruschke, Hans Edvard**
**Ruschke Madgwick Seide & Kollegen**
**Postfach 86 06 29**
**81633 München (DE)**

(56) Entgegenhaltungen:
**DE-A1- 10 313 855     DE-A1-102008 053 166**
**JP-U- S6 044 482**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Hysteresekupplung oder -bremse sowie ein Drehmoment-Justierverfahren für eine Hysteresekupplung oder -bremse mit den Merkmalen der Oberbegriffe der unabhängigen Patentansprüche.

Aus dem Stand der Technik sind Hysteresekupplungen bekannt, wie dies beispielsweise in EP 1 026 815 B1 offenbart wird. Bei Hysteresekupplungen mit den Merkmalen dieses Patents wird eine Drehbewegung berührungslos zwischen einem mit Permanentmagneten bestückten radial innen liegenden ersten Nabenteil über einen zylindrischen Luftspalt hinweg zu einem radial außen liegenden mit magnetisierbaren Hystereseringen bestückten zweiten Nabenteil übertragen. Wenn dabei das zwischen dem ersten und dem zweiten Nabenteil übertragene Drehmoment unterhalb des Schlupfdrehmoments der Kupplung liegt, rotieren beide Nabenteile mit der gleichen Drehzahl. Bei Überschreiten des Schlupfdrehmoments ergibt sich eine Differenzdrehzahl zwischen den beiden Nabenteilen und die dabei entstehende Verlustleistung wird in Wärme umgewandelt.

Durch den konstruktiven Aufbau der Kupplung und durch die Anordnung der Lagerung zwischen den beiden Nabenteilen arbeitet die Kupplung mit einer festen axialen Überdeckung zwischen den Permanentmagneten und den Hystereseringen. Außerdem hat auch der radiale Luftspalt, über den hinweg das Drehmoment übertragen wird, eine konstante Größe, die durch die Dimensionen der verwendeten Teile vorgegeben ist. Daraus ergibt sich für diese Hysteresekupplung nach dem Stand der Technik der Nachteil, dass die Größe des übertragbaren Drehmoments direkt von den Abmessungen der verwendeten Bauteile und den magnetischen Eigenschaften der an beiden Nabenteilen verwendeten Magnetwerkstoffe abhängt.

Sowohl die Bauteilabmessungen als auch die magnetischen Eigenschaften der verwendeten Magnetwerkstoffe unterliegen herstellungsbedingten Schwankungen, die zu entsprechend großen Streuungen des Schlupfdrehmoments der Kupplung führen.

Bei der Kupplung nach dem Stand der Technik sind keine konstruktiven Möglichkeiten vorgesehen, diese Streuungen durch adäquate Verstelleinrichtungen oder andere geeignete Maßnahmen zu kompensieren.

In der industriellen Praxis haben sich daher verschiedene fertigungstechnische und konstruktive Maßnahmen im Zusammenhang mit Hysteresekupplungen und -bremsen etabliert, um die genannten Streuungen der Schlupfdrehmomente auszugleichen.

Als erste Maßnahme aus dem Bereich der Fertigungstechnik wird hier die Nacharbeit der Dimensionen der verwendeten Bauteile, insbesondere der Permanentmagnete und/oder der Hystereseringe erwähnt. Dazu wird zunächst die Hysteresekupplung oder -bremse zumindest teilweise montiert und anschließend das Schlupfdrehmoment gemessen. Bei Überschreiten der Grenze eines vorgegebenen Drehmomentwertes wird die Oberfläche der Bauteile, welche den zylindrischen Luftspalt der Kupplung bilden, so bearbeitet, dass sich der zylindrische Luftspalt vergrößert und sich dadurch das übertragbare Drehmoment der Hysteresekupplung oder -bremse verringert. Dazu kann das radial innen liegende Bauteil an der Außenfläche und/oder das radial außen liegende Bauteil an dessen Innenfläche bearbeitet werden. Die Bearbeitung kann dabei durch Drehen, Schleifen oder ein vergleichbares materialabtragendes Fertigungsverfahren erfolgen.

Nachteilig an diesem Verfahren ist die nach der Bearbeitung der Permanentmagnete und/oder Hystereseringe blanke metallische Oberfläche, die bei den üblichen verwendeten Werkstoffen sehr empfindlich gegenüber Umgebungseinflüssen ist. Außerdem besteht vor allem bei spangebenden Bearbeitungsverfahren ein hohes Risiko, die bearbeiteten Bauteile zu überhitzen.

Als zweite Maßnahme aus dem Bereich der Fertigungstechnik wird die irreversible Veränderung der magnetischen Eigenschaften durch Erwärmen der Bauteile praktiziert. Auch hier wird zunächst die Hysteresekupplung oder -bremse wenigstens teilweise montiert und anschließend das Schlupfdrehmoment gemessen. Bei Überschreiten der Höhe eines vorgegebenen Drehmomentwertes wird die komplette Kupplung oder Teile davon in der Weise erwärmt, dass die Permanentmagnete und/oder die Hystereseringe eine dauerhafte Schwächung ihrer magnetischen Eigenschaften in einer solchen Größenordnung erfahren, dass das Schlupfdrehmoment der Kupplung danach einen vordefinierten Wert erreicht.

Nachteilig an diesem Verfahren sind der hohe Aufwand zu dessen Durchführung sowie ein hohes Risiko, nach der Wärmebehandlung irreversibel unterhalb des vorgegebenen Drehmomentwertes zu liegen.

Eine konstruktive Maßnahme zum Ausgleich von fertigungs- und materialbedingten Streuungen der Schlupfdrehmomente von Hysteresekupplungen und -bremsen ist aus der DE 103 13 855 B4 der Anmelderin bekannt. Dabei wird eine Hysteresekupplung oder -bremse offenbart, bei der die Permanentmagnete und die Hystereseringe axial neben der Wälzlagerung der Kupplung angeordnet sind und bei der die axiale Überdeckung zwischen den Permanentmagneten und den Hystereseringen und damit das übertragbare Drehmoment durch eine radial außerhalb der Wälzlagerung angeordnete Verstell- und Zentriereinrichtung einstellbar ist.

Nachteilig an der genannten Hysteresekupplung oder -bremse nach diesem Stand der Technik sind der zusätzliche Bauraumbedarf für die Verstell- und Zentriereinrichtung und der zur Drehmomentverstellung zusätzlich erforderliche axiale Verstellweg sowie der dazu erforderliche hohe technische Aufwand.

Gerade bei Hysteresekupplungen, die in hohen Stückzahlen hergestellt und nur mit einem konstanten Drehmoment betrieben werden, ist dieser beschriebene technische Aufwand nicht erwünscht.

Die JP S60 44482U zeigt die Wirkungsmechanismen und die Art der Einstellung einer Hysteresekupplung bzw. -bremse, wie sie vorliegend zur Anwendung kommen, aber sie befasst sich nicht näher mit der konstruktiven Ausbildung einer solchen Vorrichtung, um eine kompakte Bauweise der Kupplung oder Bremse zu erreichen und dies mit einem geringen technischen Aufwand für dessen Herstellung zu verbinden und gleichzeitig eine hohe Präzision des einstellbaren Schlupfmomentes zu erreichen.

Die nächstliegende DE 10 2008 053 166 der Anmelderin zeigt eine Hysteresekupplung oder -bremse aus einem Antriebsteil, das mit einem ringförmigen Hysteresematerial bestückt ist, und einem Abtriebsteil, welches konzentrisch zum Antriebsteil angeordnet und mit Permanentmagneten bestückt ist. Das Antriebsteil ist als topfförmiger Flansch ausgebildet, auf dessen Innenwand die Wälzlagerung befestigt ist, und die Permanentmagnete und das Hysteresematerial sind radial oberhalb der Wälzlagerung angeordnet. Dieser Stand der Technik zeigt zwar gewindemäßig ausgebildete axiale Verstelleinrichtungen zur Einstellung des Schlupfdrehmomentes, doch sind diese unvorteilhaft positioniert, so dass dieser Stand der Technik sehr voluminös baut.

Aus den Nachteilen der bisher beschriebenen Hysteresekupplungen oder Hysteresebremsen nach dem Stand der Technik und aus den Nachteilen der beschriebenen Maßnahmen aus dem Bereich der Fertigungstechnik kann für die Hysterekupplung oder -bremse gemäß der vorliegenden Erfindung folgende Aufgabenstellung definiert werden:

- Kompakte Bauweise der Kupplung oder Bremse.
- Geringer technischer Aufwand für die Herstellung.
- Hohe Präzision des eingestellten Schlupfdrehmoments.

Zur Lösung dieser Aufgabenstellung wird erfindungsgemäß eine Hysteresekupplung oder -bremse nach Anspruch 1 vorgeschlagen, die bei kompakten Außenabmessungen und bei geringem technischem Aufwand ein Höchstmaß an Genauigkeit bezüglich des an der Kupplung oder Bremse eingestellten Schlupfdrehmoments bereitstellt.

Außerdem wird im Anspruch 11 ein Verfahren zur Montage und Justierung dieser Hysteresekupplung oder -bremse vorgeschlagen. Dabei ist vorgesehen, die in der jeweiligen Kupplung eingebauten Permanentmagnete und Hystereseringe in einer Justiervorrichtung zu montieren, bei verschiedenen axialen Überdeckungen der Permanentmagnete und Hystereseringe das übertragbare Drehmoment zu ermitteln und das erforderliche exakte Maß der Überdeckung festzustellen, bei dem das gewünschte Drehmoment der Hysteresekupplung oder -bremse übertragen wird. Anschließend ist vorgesehen, die Permanentmagnete und Hystereseringe mit exakt diesem in der Justiervorrichtung festgestellten Maß an Überdeckung in die Kupplung einzubauen.

Dazu kann ein in der Justiervorrichtung ermitteltes Abstandsmaß direkt oder indirekt durch geeignete Umrechnung in ein Abstandsmaß in der Hysteresekupplung oder -bremse übertragen und fixiert werden.

Dazu ist eine erste Vorgehensweise möglich, bei der Ermittlung der für ein bestimmtes Drehmoment erforderlichen Überdeckung die Permanentmagnete und/oder die Hystereseringe direkt in die Justiervorrichtung einzubauen.

Alternativ besteht eine zweite sehr vorteilhafte Möglichkeit, die Permanentmagnete und/oder die Hystereseringe zunächst fest in die zugehörigen Nabenteile einzubauen und anschließend mit den dadurch gebildeten Nabenbaugruppen in der Justiervorrichtung die dem geforderten Drehmoment entsprechende Überdeckung zu ermitteln.

In besonders vorteilhafter Weise können die erfindungsgemäße Hysteresekupplung oder -bremse sowie das Justierverfahren realisiert werden, wenn die Permanentmagnete mit der erforderlichen in Umfangsrichtung abwechselnden Polung durch einen durchgehenden Magnetring gebildet werden.

Genauso vorteilhaft ist es, wenn zur Erzielung des gewünschten Drehmoments nur eine möglichst geringe Zahl von Hystereseringen oder nur ein Hysteresering verwendet wird.

Zusammengefasst betrifft diese im Anspruch 1 definierte Erfindung eine Hysteresekupplung oder -bremse, bestehend aus einer ersten mit zumindest einem Hysteresering bestückten Nabenbaugruppe und einer mit Magneten bestückten zweiten Nabenbaugruppe, wobei die Hystereseringe und/oder die Magnete in der Hysteresekupplung konstruktiv über einen so großen axialen Freiraum verfügen, dass zur endgültigen Einstellung einer gewünschten axialen Überdeckung zwischen Hystereseringen und Magneten ein bestimmtes Kupplungsmaß (DK) realisierbar ist. Weiterhin wird ein Justierverfahren nach Anspruch 11 beschrieben, wonach in einer Kalibriervorrichtung mit den in der Hysteresekupplung verwendeten Hystereseringen und Magneten die einem vordefinierten Drehmoment entsprechende axiale Überdeckung der Hystereseringe und Magnete und damit ein Vorrichtungsmaß (DV) ermittelt wird. Das Vorrichtungsmaß (DV) wird direkt oder durch Umrechnung in ein Kupplungsmaß (DK) überführt, welches die endgültige Montageposition der Hystereseringe und Magnete in der Kupplung vorgibt.

Vorteilhafte Aspekte der Hysteresekupplung oder -bremse und des Justierverfahrens ergeben sich aus den abhängigen Patentansprüchen und aus den Beschreibungen der nachfolgenden Zeichnungen.

**Es zeigen:**

**Fig. 1**       Perspektivische Darstellung einer Hystere-

**Fig. 2**     Längsschnitt durch die Hysteresekupplung aus Fig.1.

**Fig. 3**     Halber Querschnitt durch die Hysteresekupplung aus Fig. 2.

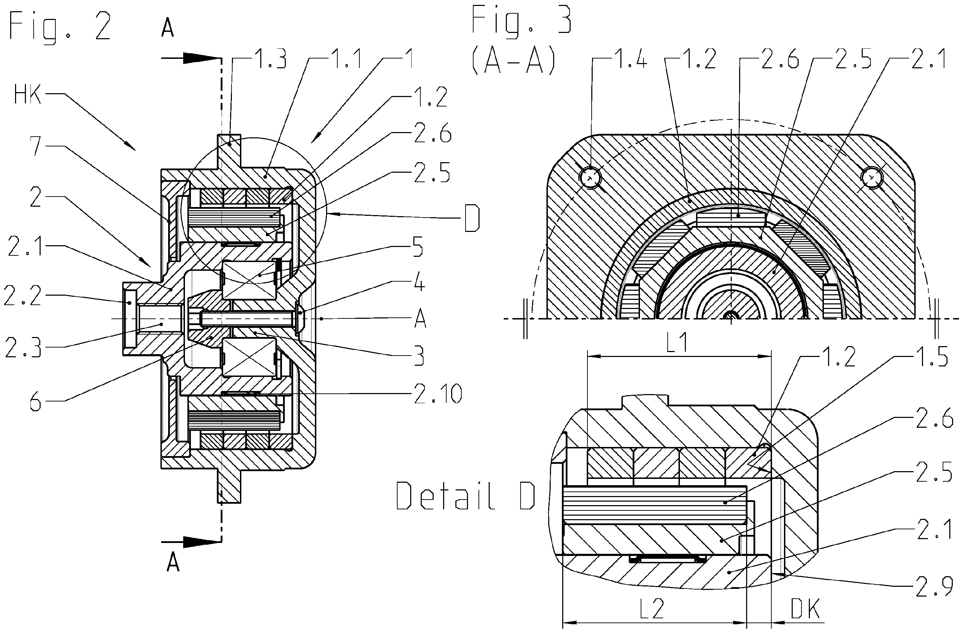

**Detail D**     Vergrößerter Ausschnitt eines Teilbereiches der Hysteresekupplung aus Fig. 2.

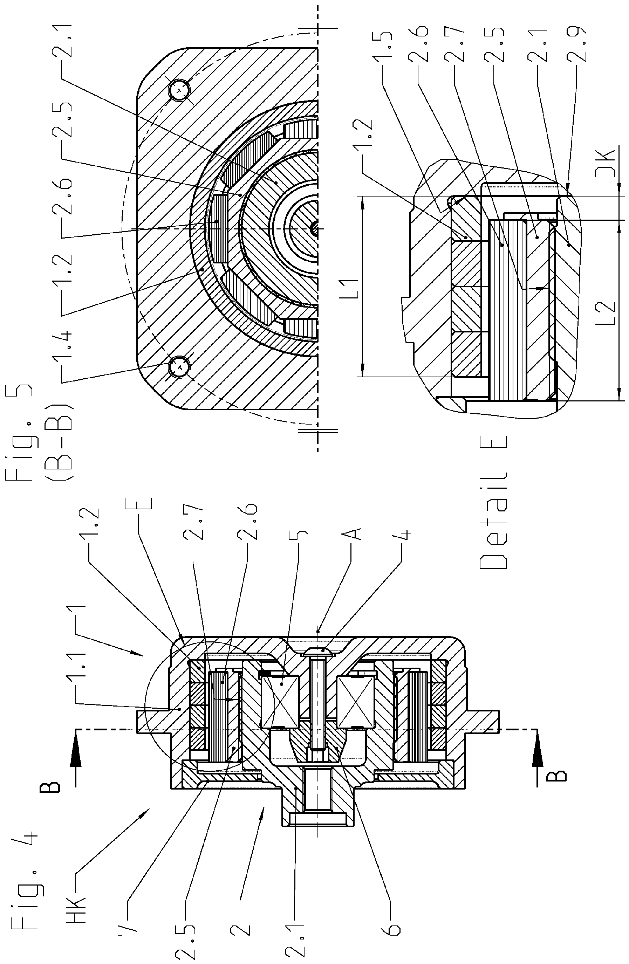

**Fig. 4**     Längsschnitt eines zweiten Beispiels einer Hysteresekupplung.

**Fig. 5**     Halber Querschnitt durch die zweite Hysteresekupplung aus Fig. 4.

**Detail E**     Vergrößerter Ausschnitt eines Teilbereiches der Hysteresekupplung aus Fig. 4.

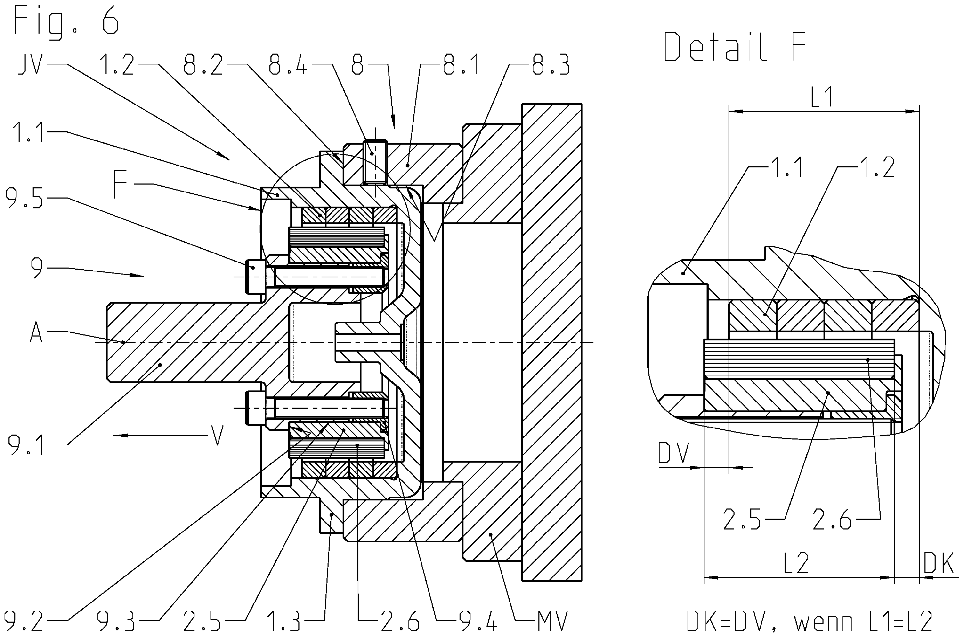

**Fig. 6**     Längsschnitt durch ein erstes Ausführungsbeispiel einer Justiervorrichtung mit Teilen der ersten Hysteresekupplung.

**Detail F**     Vergrößerter Ausschnitt eines Teilbereiches der Justiervorrichtung aus Fig. 6.

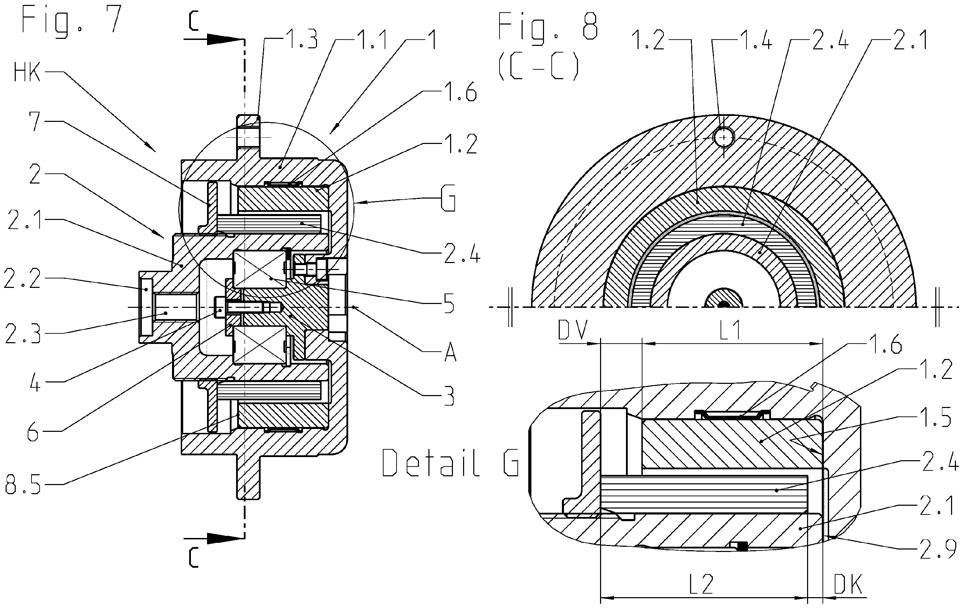

**Fig. 7**     Längsschnitt einer erfindungsgemäßen Hysteresekupplung.

**Fig. 8**     Querschnitt durch die Hysteresekupplung aus Fig. 7.

**Detail G**     Vergrößerter Ausschnitt eines Teilbereiches der Hysteresekupplung aus Fig. 7.

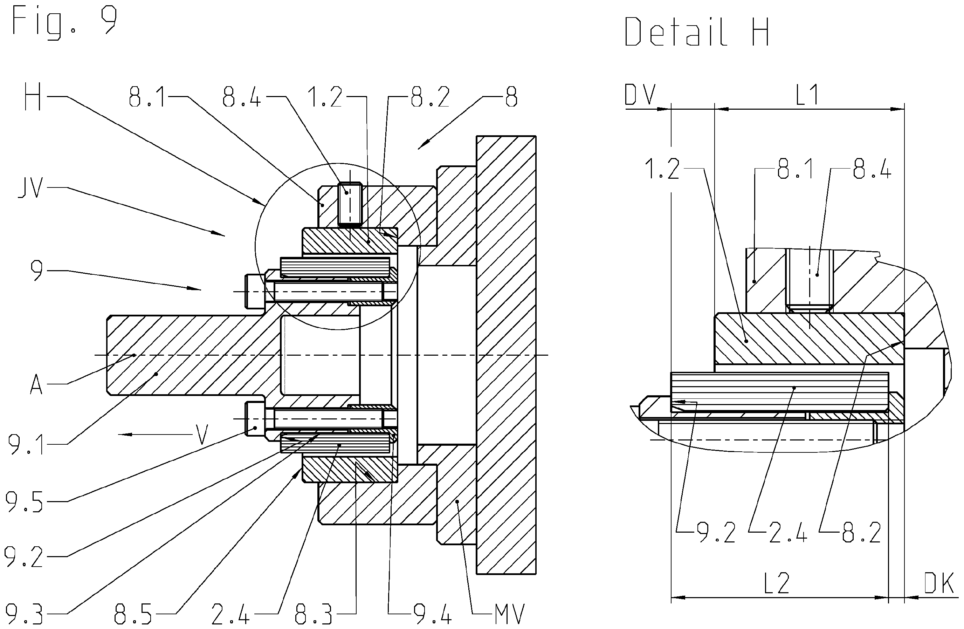

**Fig. 9**     Längsschnitt durch ein zweites Ausführungsbeispiel einer Justiervorrichtung mit Teilen der Hysteresekupplung nach Fig. 7.

**Detail H**     Vergrößerter Ausschnitt eines Teilbereiches der Justiervorrichtung aus Fig. 9.

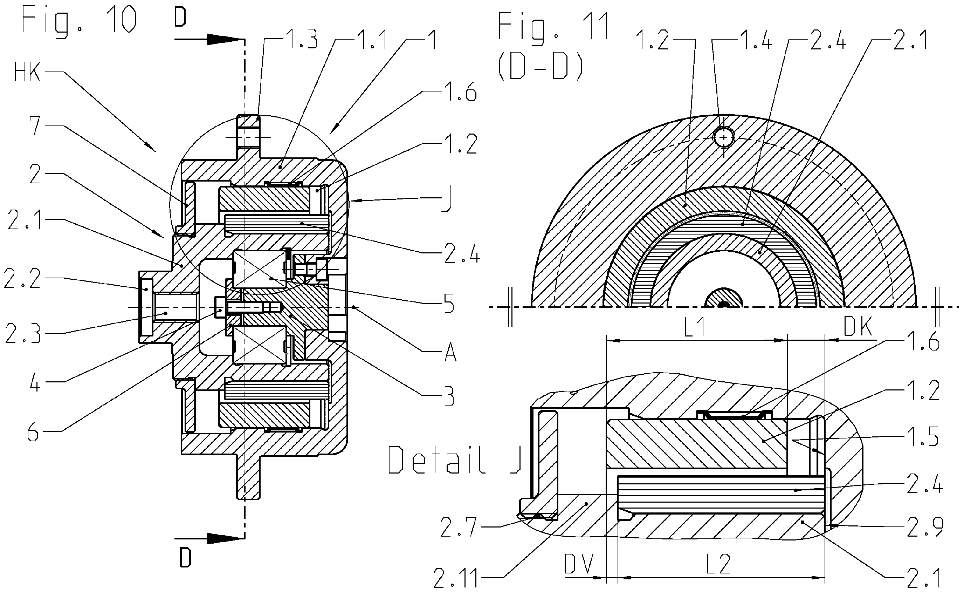

**Fig. 10**     Längsschnitt eines weiteren Vergleichsbeispiels einer Hysteresekupplung.

**Fig. 11**     Querschnitt durch die Hysteresekupplung aus Fig. 10.

**Detail J**     Vergrößerter Ausschnitt eines Teilbereiches der Hysteresekupplung aus Fig. 10.

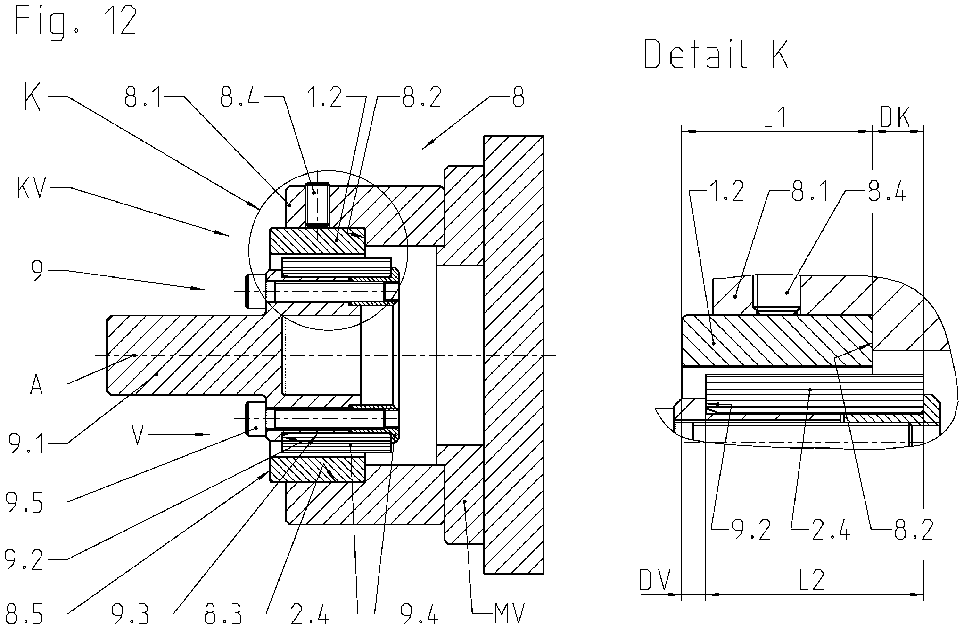

**Fig. 12**     Längsschnitt durch ein drittes Ausführungsbeispiel einer Justiervorrichtung mit Teilen der vierten Hysteresekupplung.

**Detail K**     Vergrößerter Ausschnitt eines Teilbereiches der Justiervorrichtung aus Fig. 12.

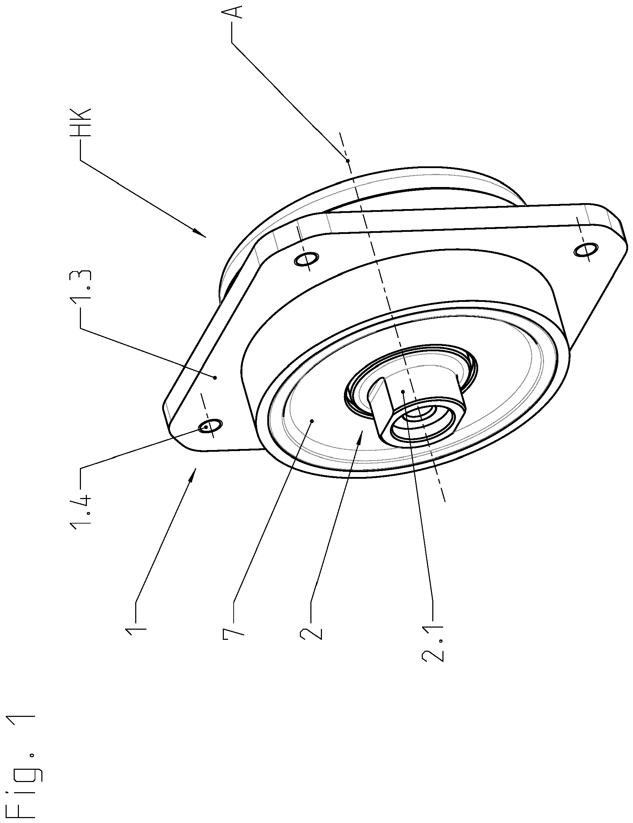

In **Fig. 1** wird zur Verdeutlichung einer möglichen äußeren Gestalt zunächst eine perspektivische Darstellung eines ersten nicht zur Erfindung gehörenden Vergleichsbeispiels einer Hysteresekupplung oder -bremse gezeigt.

Die Hysteresekupplung oder -bremse, nachfolgend nur noch als Hysteresekupplung (HK) bezeichnet, besteht dabei aus einer ersten Nabenbaugruppe (1) und einer zweiten Nabenbaugruppe (2), die um eine Rotationsachse (A) zueinander drehbar gelagert sind. Die Drehmomentübertragung erfolgt dabei von einem Flanschgewinde (1.4) eines Antriebsflansches (1.3) über einen im Innern der Hysteresekupplung (HK) befindlichen Hysteresemechanismus zu einem zweiten Nabenteil (2.1). Das Innere der Hysteresekupplung (HK) ist dabei durch ein Dichtelement (7) vor Umgebungseinflüssen geschützt.

**Fig. 2** zeigt einen Längsschnitt durch die Hysteresekupplung (HK) aus Fig. 1, bestehend aus einer ersten und einer zweiten Nabenbaugruppe (1, 2). Die erste Nabenbaugruppe (1) und die zweite Nabenbaugruppe (2) sind dabei über ein auf dem Lagerbolzen (3) mittels eines Lagerdeckels (6) und einer Bolzenschraube (4) fixiertes Kupplungslager (5) um die Rotationsachse (A) drehbar zueinander gelagert. Die erste Nabenbaugruppe (1) besteht aus einem glockenförmig ausgebildeten ersten Nabenbauteil (1.1), das als Schnittstelle zu weiteren hier nicht dargestellten Baugruppen einen radial nach außen gerichteten Antriebsflansch (1.3) mit auf einem Teilkreis befindlichen Flanschgewinden (1.4) aufweist.

Der Lagerbolzen (3) und das erste Nabenbauteil (1.1) sind in vorteilhafter Weise einteilig ausgeführt, wobei als geeignetes Material hierfür ein nicht magnetisierbarer Werkstoff wie austenitischer Stahl oder ein Leichtmetall, vorzugsweise Aluminium vorgesehen ist.

Auf einer Innenmantelfläche des ersten Nabenteils (1.1) ist eine Vielzahl von Hystereseringen (1.2) angeordnet, im vorliegenden Beispiel 4 Stück. Dabei bestehen die Hystereseringe (1.2) aus einem leicht zu magnetisierenden bzw. umzumagnetisierenden Material (z. B. AlNiCo) und sind stoffschlüssig, beispielsweise durch ein Klebeverfahren fest mit dem ersten Nabenteil (1.1) verbunden.

Die zweite Nabenbaugruppe (2) besteht aus einem ebenfalls glockenförmig ausgebildeten zweiten Nabenteil (2.1), das konzentrisch innerhalb der ersten Nabenbaugruppe (1) angeordnet ist und das als Schnittstelle zu weiteren hier nicht dargestellten Bauteilen an dessen axialem Ende eine Antriebsbohrung (2.2) und ein Antriebsgewinde (2.3) besitzt.

Auf der Außenmantelfläche des zweiten Nabenteils (2.1) ist ein Magnetträger (2.5) mit daran aufgebrachten Magnetquadern (2.6) fixiert, wobei die Magnetquader (2.6) durch ein Klebeverfahren auf dem Magnetträger (2.5) befestigt sind und wobei der Magnetträger (2.5) über einen zweiten Toleranzring (2.10) auf das zweite Nabenteil (2.1) aufgepresst ist. Die Magnetquader (2.6) bestehen dabei aus einem Permanentmagnetwerkstoff, beispielsweise aus Seltenen-Erden-Material, wobei die Feldstärke der Magnetquader so ausgelegt ist, dass diese ausreicht, die Hystereseringe (1.2) vollständig zu magnetisieren.

Die Drehmomentübertragung der Hysteresekupplung (HK) erfolgt berührungslos zwischen den sich in Umfangsrichtung abwechselnden radial gerichteten Nord- und Südpolen der Magnetquader (2.6) und den Hystereseringen (1.2) im Inneren des ersten Nabenteils (1.1). Die Magnetquader (2.6) und die Hystereseringe (1.2) sind durch ein mit dem ersten Nabenteil (1.1) fest verbundenes und mit dem zweiten Nabenteil (2.1) einen konzentrischen Dichtspalt bildendes Dichtelement (7) gegenüber Umgebungseinflüssen geschützt.

Die Drehmomentübertragung der Hysteresekupplung (HK) basiert auf dem Zusammenwirken der in Umfangsrichtung abwechselnd angeordneten radial gerichteten Nord- und Südpole der Magnetquader (2.6) und den gegenüberstehenden Hystereseringen (1.2). Tritt zwischen der ersten Nabenbaugruppe (1) und der zweiten Nabenbaugruppe (2) keine Relativbewegung auf, dann erzeugen die Magnetquader (2.6) in den Hystereseringen (1.2) gegenüberliegende und entgegengesetzt magnetisierte Pole. Mit Hilfe dieser radial wirkenden Magnetkräfte kann ein Drehmoment zwischen der ersten Nabenbaugruppe (1) und der zweiten Nabenbaugruppe (2) erzeugt werden.

Wird die erste Nabenbaugruppe (1) mit den Hystereseringen (1.2) gegenüber der zweiten mit Magnetquadern (2.6) bestückten Nabenbaugruppe (2) gedreht, so werden die Hysteres e ringe (1.2) während dieser Drehung ummagnetisiert (d. h. aus einem Nordpol wird ein Südpol und umgekehrt). Dabei wird die sogenannte Hystereseschleife im B-H-Diagramm der Hysterseringe (1.2) durchlaufen und die eingeschlossene Fläche im B-H-Diagramm entspricht der Energie, die zur Ummagnetisierung aufgebracht werden muss. Diese Energie ist proportional zum Drehmoment, das die Hysteresekupplung (HK) im Schlupfbetrieb bzw. im schlupffreien Betrieb überträgt.

Die Höhe des durch die Hysteresekupplung (HK) übertragenen Drehmoments hängt neben den genannten magnetischen und den geometrischen Eigenschaften der verwendeten Bauteile von der axialen Überdeckung von Magnetquadern (2.6) und Hystereseringen (1.2) ab, die sich durch das in dem **Detail D** dargestellte Kupplungsmaß (DK) ergibt. Das Kupplungsmaß (DK) wird im vorliegenden Beispiel zweckmäßig zwischen dem mit der ersten Anschlagfläche (1.5) des ersten Nabenteils (1.1) in einer Ebene befindliche zweiten Nabenende (2.9) und dem axialen Ende der Magnetquader (2.6) gemessen. Die Ermittlung des für ein bestimmtes übertragbares Drehmoment der Hysteresekupplung (HK) erforderlichen Kupplungsmaßes (DK) wird an anderer Stelle anhand der Fig. 6 näher erläutert.

Weiterhin sind aus dem Detail D die axiale Gesamtlänge der Hystereseringe (L1) und die Länge (L2) der Magnetquader (2.6) ersichtlich. (L1) und (L2) sind im vorliegenden Beispiel gleich groß dargestellt.

In Fig. 3 ist ein Schnitt A-A durch die Hysteresekupplung (HK) aus Fig. 2 gezeigt. Daraus sind die Bestückung des Magnetträgers (2.5) mit einzelnen Magnetquadern (2.6) und die ringförmige Gestalt der Hystereseringe (1.2) ersichtlich.

**Fig. 4** zeigt ein weiteres Beispiel einer Hysteresekupplung (HK), die grundsätzlich dem Aufbau der Kupplung aus Fig. 2 entspricht. Die Hysteresekupplung (HK) in Fig. 4 weist gegenüber Fig. 2 eine Befestigung des Magnetträgers (2.5) auf dem zweiten Nabenteil (2.1) über ein Nabengewinde (2.7) auf. Dabei ist der mit einem Innengewinde versehene Magnetträger (2.5) auf dem Nabengewinde (2.7) in einer definierten axialen Position aufgeschraubt und im Gewinde verklebt, die der gewünschten axialen Überdeckung zwischen Magnetquadern (2.6) und Hystereseringen (1.2) zur Erzielung des geforderten übertragbaren Drehmoments der Hysteresekupplung (HK) entspricht.

In dem **Detail E** ist wieder das Kupplungsmaß (DK) dargestellt, das der axialen Überdeckung zwischen den Magnetquadern (2.6) mit der Länge (L2) und den Hystereseringen (1.2) mit der Länge (L1) zugeordnet ist.

Aus dem Schnitt B-B in **Fig. 5** ist nochmals die Anordnung der einzelnen Magnetquader (2.6) auf dem Magnetträger (2.5) sowie die ringförmige Gestaltung der Hystereseringe (1.2) zu ersehen.

Ein erstes Ausführungsbeispiel einer Justiervorrichtung (JV) zur Durchführung des erfindungsgemäßen Justierverfahrens ist in **Fig. 6** dargestellt. Die Justiervorrichtung (JV) ist dabei aus einer ersten Vorrichtungsbaugruppe (8) und einer zweiten Vorrichtungsbaugruppe (9) aufgebaut, die um eine Rotationsachse (A) drehbar zueinander gelagert sind.

Im vorliegenden Beispiel besteht die erste Vorrichtungsbaugruppe (8) aus einer ersten Vorrichtungsnabe (8.1), die über eine Drehmomentmessvorrichtung (MV) ortsfest angeordnet ist. In einer geeigneten ersten Zentrierung (8.3) der ersten Vorrichtungsnabe (8.1) ist das erste Nabenteil (1.1) der Hysteresekupplung (HK) mit den eingeklebten Hystereseringen (1.2) aufgenommen, am Antriebsflansch (1.3) an einer ersten Planfläche (8.2) angeschlagen und mit einer Halteschraube (8.4) fixiert.

Die zweite Vorrichtungsbaugruppe (9) besteht aus einer zweiten Vorrichtungsnabe (9.1) mit einer zweiten Planfläche (9.2) und einer zweiten Zentrierung (9.3), auf der ein Magnetträger (2.5) mit aufgeklebten Magnetquadern (2.6) über einen Spanndeckel (9.4) und Spannschrauben (9.5) reibschlüssig befestigt ist.

Weiterhin ist die zweite Vorrichtungsbaugruppe (9) zur ersten Vorrichtungsbaugruppe (8) um die Rotationsachse (A) drehbar gelagert und parallel zur Rotationsachse (A) axial verschiebbar. Aus der Darstellung in dem **Detail F** sind weiterhin die axiale Länge (L1) des gesamten Paketes der Hystereseringe (1.2) und die axiale Länge (L2) der Magnetquader ersichtlich. Die Längen (L1) und (L2) sind im dargestellten Beispiel gleich groß, was Vorteile bei der Ermittlung des Vorrichtungsmaßes (DV) und bei dessen Übertragung auf ein Kupplungsmaß (DK) in Detail D und Detail E mit sich bringt. Es ist aber auch denkbar, dass die Längen (L1) und (L2) unterschiedlich groß sind.

Für den Justiervorgang mit der Justiervorrichtung (JV) nach **Fig. 6** wird folgender Ablauf vorgeschlagen:

Das erste Nabenteil (1.1) mit Hystereseringen (1.2) und der Magnetträger (2.5) mit aufgeklebten Magnetquadern (2.6) werden in die erste Vorrichtungsnabe (8.1) und in die zweite Vorrichtungsnabe (9.1) bis zur ersten und zweiten Planfläche (8.2, 9.2) eingesetzt und mit der Halteschraube (8.4) und den Spannschrauben (9.5) befestigt.

Halteschraube (8.4) und Spannschrauben (9.5) sind dabei so dimensioniert, dass sie das maximale Drehmoment der Hysteresekupplung (HK) mit ausreichender Sicherheit reibschlüssig übertragen.

Die erste Vorrichtungsbaugruppe (8) und die zweite Vorrichtungsbaugruppe (9) werden in eine axiale Position zueinander gebracht, bei der sich die in axialer Richtung gleich langen Hystereseringe und Magnetquader vollständig überdecken und bei der somit das Vorrichtungsmaß (DV) gleich "Null" ist.

Die zweite Vorrichtungsbaugruppe (9) wird um die Rotationsachse (A) in Rotation versetzt mit einer Drehzahl, die etwa der späteren Betriebsdrehzahl der Hysteresekupplung (HK) entspricht und es wird gleichzeitig über die Drehmomentmessvorrichtung (MV) mit der Messung des übertragenen Drehmoments begonnen. Das ermittelte Drehmoment beim Vorrichtungsmaß (DV) "Null" muss mindestens gleich groß oder größer als das später in der Hysteresekupplung zu übertragende Drehmoment sein.

Bei kontinuierlicher Rotation und Messung des übertragenen Drehmoments wird die zweite Vorrichtungsbaugruppe (9) in Verschieberichtung (V) parallel zur Rotationsachse (A) von der ersten Vorrichtungsbaugruppe (8) wegbewegt, bis bei der Messung der gewünschte Drehmomentwert angezeigt wird. Bei diesem Drehmomentwert wird das Vorrichtungsmaß (DV) ermittelt.

Bei den Hysteresekupplungen (HK) entsprechend Fig. 2 bis Fig. 5 kann das Vorrichtungsmaß (DV) direkt als Kupplungsmaß (DK) verwendet werden.

Danach wird die Montage der in **Fig. 2** bis **Fig. 5** dargestellten Hysteresekupplung (HK) in vorteilhafter Weise wie folgt vorgeschlagen:

Die erste Nabenbaugruppe (1) und der Magnetträger (2.5) mit den aufgeklebten Magnetquadern (2.6) werden aus der Justiervorrichtung (JV) entnommen.

Da die erste Anschlagfläche (1.5) des ersten Nabenteiles (1.1) und das zweite Nabenende (2.9) in einer Ebene liegen, wird der Magnetträger (2.5) gemäß Fig. 2 mit den Magnetquadern (2.6) bis zum Kupplungsmaß (DK) auf das zweite Nabenteil (2.1) über den zweiten Toleranzring (2.10) hinweg aufgepresst oder der Magnetträger (2.5) wird gemäß Fig. 4 bis zum Erreichen des Kupplungsmaßes (DK) auf das Nabengewinde (2.7) des zweiten Nabenteiles (2.1) aufgeschraubt und verklebt.

Anschließend können die erste und die zweite Nabenbaugruppe (1, 2) über das Kupplungslager (5) verbunden und mit dem Dichtelement (7) vor äußeren Einflüssen geschützt werden.

Signifikantes Merkmal von Hysteresekupplungen oder -bremsen gemäß Fig. 2 bis Fig. 5, die gleiche Längen (L1) und (L2) aufweisen und die einen wie anhand Fig. 6 beschriebenen Justiervorgang durchlaufen, ist ein Vorrichtungsmaß (DV) oder Kupplungsmaß (DK), das so bemessen ist, dass sich das Paket der Hystereseringe (1.2) und die Magnetquader (2.6) in axialer Richtung nicht vollständig überdecken. Nur dadurch kann mit ausreichender Sicherheit gewährleistet werden, dass die Kupplung das geforderte Drehmoment erreicht.

In Fig. 7 ist der Längsschnitt eines Ausführungsbeispiels der erfindungsgemäßen Hysteresekupplung (HK) dargestellt, anhand derer ein weiteres Justierverfahren erläutert wird.

Die Hysteresekupplung (HK) besteht wieder aus einer ersten und einer zweiten Nabenbaugruppe (1, 2), wobei die beiden Nabenbaugruppen (1, 2) über ein auf dem Lagerbolzen (3) mittels eines Lagerdeckels (6) und einer Bolzenschraube (4) fixiertes Kupplungslager (5) um die Rotationsachse (A) drehbar zueinander gelagert sind. Die erste Nabenbaugruppe (1) besteht wie in Fig. 2 und Fig. 4 aus einem glockenförmig ausgebildeten ersten Nabenbauteil (1.1), das als Schnittstelle zu weiteren hier nicht dargestellten Bauteilen einen radial nach außen gerichteten Antriebsflansch (1.3) mit auf einem Teilkreis befindlichen Flanschgewinden (1.4) aufweist.

Der Lagerbolzen (3) ist bei diesem Ausführungsbeispiel für die Übertragung hoher radialer Kräfte aus einem Werkstoff hoher Festigkeit, vorzugsweise einer Stahllegierung gefertigt und durch geeignete Verbindungsmittel, vorzugsweise Schrauben mit dem ersten vorzugsweise aus einem Leichtmetall bestehenden ersten Nabenbauteil (1.1) verbunden.

Auf einer Innenmantelfläche des ersten Nabenteils (1.1) ist ein einteilig ausgeführter Hysteresering (1.2) angeordnet, der im vorliegenden Beispiel durch einen ersten Toleranzring (1.6) reibschlüssig mit dem ersten Nabenteil (1.1) verbunden ist und mit der ersten Anschlagfläche (1.5) in Kontakt steht.

Die zweite Nabenbaugruppe (2) besteht wiederum aus einem glockenförmig ausgebildeten zweiten Nabenteil (2.1), das konzentrisch innerhalb der ersten Nabenbaugruppe (1) angeordnet ist und das als Schnittstelle zu weiteren hier nicht näher dargestellten Bauteilen an deren axialem Ende über eine Antriebsbohrung (2.2) und ein Antriebsgewinde (2.3) verfügt.

Auf der Außenmantelfläche des zweiten Nabenteils (2.1) ist ein einteilig ausgeführter Magnetring (2.4) aufgeklebt, wobei die axiale Position des Magnetringes (2.4) auf dem zweiten Nabenteil (2.1) durch ein auf dem Nabengewinde (2.7) aufgeschraubtes und aufgeklebtes Dichtelement (7) definiert ist.

Die Drehmomentübertragung der Hysteresekupplung (HK) erfolgt auch bei diesem Beispiel berührungslos zwischen den sich in Umfangsrichtung abwechselnden radial gerichteten Nord- und Südpolen des Magnetringes (2.4) und dem einteilig ausgeführten Hysteresering (1.2) im Inneren des ersten Nabenteils (1.1). Der Magnetring (2.4) und der Hysteresering (1.2) sind durch das auf dem Nabengewinde (2.7) des zweiten Nabenteiles (2.1) fest verbundene und mit dem ersten Nabenteil (1.1) einen konzentrischen Dichtspalt bildende Dicht- und Anschlagelement (7) gegenüber Umgebungseinflüssen geschützt.

Die Höhe des durch die Hysteresekupplung (HK) übertragenen Drehmoments hängt auch bei diesem Beispiel neben den geometrischen und den magnetischen Eigenschaften der verwendeten Bauteile von der axialen Überdeckung von Magnetring (2.4) und Hystereresering (1.2) ab, die sich durch das in **Detail G** dargestellte Kupplungsmaß (DK) ergibt. Das Kupplungsmaß (DK) wird auch im vorliegenden Beispiel zweckmäßig zwischen dem mit der ersten Anschlagfläche (1.5) des ersten Nabenteils (1.1) in einer Ebene befindliche zweiten Nabenende (2.9) und dem axialen Ende der Magnetquader (2.6) gemessen.

Die Ermittlung des für ein bestimmtes übertragbares Drehmoment der Hysteresekupplung (HK) erforderlichen Kupplungsmaßes (DK) wird an anderer Stelle anhand der Fig. 9 näher erläutert.

Weiterhin sind aus Detail G die axiale Länge des Hysteereseringes (L1) und die Länge (L2) des Magnetringes (2.4) ersichtlich, die hier unterschiedliche Dimensionen aufweisen, die aber auch die gleiche Länge aufweisen können.

In **Fig.8** ist ein Schnitt C-C durch die erfindungsgemäße Hysteresekupplung (HK) aus Fig. 7 dargestellt. Daraus ist die durchgehende ringförmige Gestalt des Magnetringes (2.4) und des Hystereseringes (1.2) ersichtlich.

**Fig. 9** zeigt ein zweites Ausführungsbeispiel einer Justiervorrichtung (JV) zur Durchführung des erfindungsgemäßen Justierverfahrens. Die Justiervorrichtung (JV) ist dabei wie in Fig. 6 aus einer ersten Vorrichtungsbaugruppe (8) und einer zweiten Vorrichtungsbaugruppe (9) aufgebaut, die konzentrisch zueinander angeordnet und um eine Rotationsachse (A) drehbar zueinander gelagert sind.

Die erste Vorrichtungsbaugruppe (8) besteht aus einer ersten Vorrichtungsnabe (8.1), die über eine Drehmomentmessvorrichtung (MV) ortsfest angeordnet ist. In einer ersten Zentrierung (8.3) der ersten Vorrichtungsnabe (8.1) ist der einteilige Hysteresering (1.2) direkt aufgenommen, an einer ersten Planfläche (8.2) angeschlagen und mit einer Halteschraube (8.4) fixiert. Ebenso ist es denkbar, anstelle des einteiligen Hystereseringes (1.2) eine Gruppe von Hystereseringen (1.2) wie in Fig. 2 und Fig. 4 in der ersten Zentrierung (8.3) der ersten Vorrichtungsnabe (8.1) direkt aufzunehmen und mittels mehrerer Halteschrauben (8.4) zu fixieren. Dabei ist zu beachten, dass die geometrische Reihenfolge der Hystereseringe (1.2) in der Justiervorrichtung (JV) und in der Hysteresekupplung (HK) gleich sein muss.

Die zweite Vorrichtungsbaugruppe (9) besteht aus einer zweiten Vorrichtungsnabe (9.1) mit einer zweiten Planfläche (9.2) und einer zweiten Zentrierung (9.3), auf der der einteilige Magnetring (2.4) über einen Spanndeckel (9.4) und Spannschrauben (9.5) reibschlüssig befestigt ist. Weiterhin ist die zweite Vorrichtungsbaugruppe (9) zur ersten Vorrichtungsbaugruppe (8) um die Rotationsachse (A) drehbar gelagert und in die Verschieberichtung (V) parallel zur Rotationsachse (A) axial verschiebbar.

Aus der Darstellung in **Detail H** sind weiterhin die axiale Länge (L1) des Hystereseringes (1.2) und die axiale Länge (L2) des Magnetringes (2.4) ersichtlich. Die Längen (L1) und (L2) sind im dargestellten Beispiel unterschiedlich groß, was für die Übertragung des Vorrichtungsmaßes (DV) in das Kupplungsmaß (DK) eine Umrechnung erforderlich macht.

Es wird folgender Ablauf für den Justiervorgang mit der Justiervorrichtung (JV) nach **Fig. 9** vorgeschlagen:

-  Der Hysteresering (1.2) und der Magnetring (2.4) werden in die erste Vorrichtungsnabe (8.1) und in die zweite Vorrichtungsnabe (9.1) bis zur ersten und zweiten Planfläche (8.2, 9.2) eingesetzt und mit der Halteschraube (8.4) und den Spannschrauben (9.5) befestigt.

-  Die erste Vorrichtungsbaugruppe (8) und die zweite Vorrichtungsbaugruppe (9) werden in eine axiale Position zueinander gebracht, bei der sich die in axialer Richtung unterschiedlich langen Hystereseringe (1.2) und Magnetringe (2.4) vollständig überdecken. Idealerweise liegen dabei die erste Planfläche (8.2) und die der Drehmomentmessvorrichtung (MV) zugewandte Planfläche des Magnetrings (2.4) in einer Ebene. Somit entspricht das Vorrichtungsmaß (DV) in der Ausgangsposition des Justiervorgangs der Differenz zwischen der Länge des Hystereserings (1.2) und der Länge des Magnetrings (2.4).

-  Die zweite Vorrichtungsbaugruppe (9) wird um die Rotationsachse (A) in Rotation versetzt mit einer Drehzahl, die etwa der späteren Betriebsdrehzahl der Hysteresekupplung (HK) entspricht und es wird gleichzeitig über die Drehmomentmessvorrichtung (MV) mit der Messung des übertragenen Drehmoments begonnen. Das ermittelte Drehmoment beim Vorrichtungsmaß (DV) "Null" muss mindestens gleich groß oder größer als das später in der Hysteresekupplung (HK) zu übertragende Drehmoment sein.

-  Bei kontinuierlicher Rotation und Messung des übertragenen Drehmoments wird die zweite Vorrichtungsbaugruppe (9) in Verschieberichtung (V) parallel zur Rotationsachse (A) von der ersten Vorrichtungsbaugruppe (8) wegbewegt, bis bei der Messung der gewünschte Drehmomentwert angezeigt wird. Bei diesem Drehmomentwert wird das Vorrichtungsmaß (DV) ermittelt.

-  Bei den Hysteresekupplungen (HK) entsprechend Fig. 7 muss das Vorrichtungsmaß (DV) in das entsprechende Kupplungsmaß (DK) umgerechnet werden nach der Gleichung:

$$DK = DV + L1 - L2$$

Hier ist es für die Drehmomentgenauigkeit sinnvoll, die Lage von Hysteresering (1.2) und Magnetring (2.4) von der Justiervorrichtung (JV) in die Hysteresekupplung (HK) direkt zu übernehmen.

Für die Montage einer Hysteresekupplung (HK) gemäß Fig. 7 wird folgender vorteilhafter Ablauf vorgeschlagen:

- Der Hysteresering (1.2) und der Magnetring (2.4) werden aus der Justiervorrichtung (JV) entnommen.
- Da die erste Anschlagfläche (1.5) des ersten Nabenteiles (1.1) und das zweite Nabenende (2.9) in einer Ebene liegen, wird das Dicht- und Anschlagelement (7) in einem Abstand vom zweiten Nabenende (2.9) auf das Nabengewinde (2.7) aufgeschraubt und verklebt, der der Länge des Magnetringes (L2) zuzüglich des Kupplungsmaßes (DK) entspricht. Anschließend wird der Magnetring (2.4) bis zum Anschlag- und Dichtelement (7) auf das zweite Nabenteil (2.1) aufgeschoben und verklebt.
- Abschließend können die erste und die zweite Nabenbaugruppe (1, 2) über das Kupplungslager (5) verbunden werden.

Signifikantes Merkmal von Hysteresekupplungen oder -bremsen gemäß Fig. 7 und Fig. 8, die unterschiedliche Längen (L12) und (L2) aufweisen und die einen wie anhand Fig. 9 beschriebenen Justiervorgang durchlaufen, ist ein Vorrichtungsmaß (DB) oder Kupplungsmaß (DK), das so bemessen ist, dass keines der beiden Bauteile Hysteresering (1.2) oder Magnetring (2.4) vom anderen in axialer Richtung vollständig überdeckt wird. Nur dadurch kann auch bei Kupplungen mit unterschiedlichen Längen (L1) und (L2) mit ausreichender Sicherheit gewährleistet werden, dass das gewünschte Drehmoment erreicht wird.

**Fig. 10** zeigt schließlich den Längsschnitt eines weiteren, nicht zur Erfindung gehörenden Vergleichsbeispiels einer Hysteresekupplung (HK). Dabei besteht die Hysteresekupplung (HK) wieder aus einer ersten und einer zweiten Nabenbaugruppe (1, 2), wobei die beiden Nabenbaugruppen (1, 2) über ein auf dem Lagerbolzen (3) mittels eines Lagerdeckels (6) und einer Bolzenschraube (4) fixiertes Kupplungslager (5) um die Rotationsachse (A) drehbar zueinander gelagert sind.

Die erste Nabenbaugruppe (1) besteht wie in Fig. 7 aus einem glockenförmig ausgebildeten ersten Nabenbauteil (1.1) mit geeigneten Schnittstellen in Form eines Antriebsflansches (1.3) mit Flanschgewinden (1.4). Der Lagerbolzen (3) ist auch bei diesem Ausführungsbeispiel für die Übertragung hoher radialer Kräfte aus einem Werkstoff hoher Festigkeit, vorzugsweise einer Stahllegierung gefertigt und durch geeignete Verbindungsmittel, mit dem ersten Nabenbauteil (1.1) verbunden.

Auf einer Innenmantelfläche des ersten Nabenteils (1.1) ist ein einteilig ausgeführter Hysteresering (1.2) angeordnet, der im vorliegenden Beispiel durch einen ersten Toleranzring (1.6) reibschlüssig mit dem ersten Nabenteil (1.1) verbunden ist und zur ersten Anschlagfläche (1.5) einen als Kupplungsmaß (DK) bezeichneten Abstand aufweist, dessen Größe bei einem später anhand Fig. 12 erläuterten Justiervorgang definiert wird.

Die zweite Nabenbaugruppe (2) besteht wiederum aus einem glockenförmig ausgebildeten zweiten Nabenteil (2.1), das konzentrisch innerhalb der ersten Nabenbaugruppe (1) angeordnet ist und das als Schnittstelle zu weiteren nicht näher dargestellten Bauteilen über eine Antriebsbohrung (2.2) und ein Antriebsgewinde (2.3) verfügt.

Auf der Außenmantelfläche des zweiten Nabenteils (2.1) ist ein einteilig ausgeführter Magnetring (2.4) aufgeklebt, wobei die axiale Position des Magnetrings (2.4) auf dem zweiten Nabenteil (2.1) durch einen zweiten Nabenbund (2.11) definiert ist, mit dem der Magnetring (2.4) in Kontakt steht.

Es ist dabei besonders vorteilhaft, wenn die Länge des Magnetrings (L2) so bemessen ist, dass das dem zweiten Nabenbund (2.11) abgewandte Ende des Magnetrings (2.4) mit dem zweiten Nabenende (2.9) und mit der ersten Anschlagfläche (1.5) des ersten Nabenteils (1.1) in einer Ebene liegt.

Die Drehmomentübertragung der Hysteresekupplung (HK) erfolgt auch bei diesem Beispiel berührungslos zwischen den sich in Umfangsrichtung abwechselnden radial gerichteten Nord- und Südpolen des Magnetringes (2.4) und dem einteilig ausgeführten Hysteresering (1.2) im Inneren des ersten Nabenteils (1.1).

Der Magnetring (2.4) und der Hysteresering (1.2) sind durch das auf dem Nabengewinde (2.7) des zweiten Nabenteiles (2.1) fest verbundene und mit dem ersten Nabenteil (1.1) einen konzentrischen Dichtspalt bildende Dichtelement (7) vor Umgebungseinflüssen geschützt.

Die Höhe des durch die Hysteresekupplung (HK) übertragenen Drehmoments hängt auch bei diesem Beispiel neben den geometrischen und den magnetischen Eigenschaften der verwendeten Bauteile von der axialen Überdeckung von Magnetring (2.4) und Hysteresering (1.2) ab, die sich durch das in **Detail J** dargestellte Kupplungsmaß (DK) ergibt. Das Kupplungsmaß (DK) wird im vorliegenden Beispiel zweckmäßig zwischen der mit dem zweiten Nabenende (2.9) in einer Ebene liegenden ersten Anschlagfläche (1.5) des ersten Nabenteils (1.1) und dem axialen Ende des Hystereserings (1.2) gemessen. Die Ermittlung des für ein bestimmtes übertragbares Drehmoment der Hysteresekupplung (HK) erforderlichen Kupplungsmaßes (DK) wird an anderer Stelle anhand der Fig. 12 näher erläutert.

Weiterhin sind aus Detail J die axiale Länge des Hystereserings (L1) und die Länge (L2) des Magnetringes (2.4) ersichtlich, die hier unterschiedliche Dimensionen aufweisen. Es ist ebenso denkbar, dass die Längen (L1, L2) von Magnetring (2.4) und Hysteresering (1.2) gleich sind.

**Fig. 12** zeigt ein drittes Ausführungsbeispiel einer Justiervorrichtung (JV) zur Durchführung des erfindungsgemäßen Justierverfahrens. Die Justiervorrichtung (JV) ist dabei wie in Fig. 6 und Fig. 9 aus einer ersten Vorrichtungsbaugruppe (8) und einer zweiten Vorrichtungsbaugruppe (9) aufgebaut, die konzentrisch zueinander angeordnet und um eine Rotationsachse (A) drehbar zueinander gelagert sind. Die erste Vorrichtungsbaugruppe (8) besteht aus einer ersten Vorrichtungsnabe (8.1), die über eine Drehmomentmessvorrichtung (MV) ortsfest angeordnet ist.

In einer ersten Zentrierung (8.3) der ersten Vorrichtungsnabe (8.1) ist der einteilige Hysteresering (1.2) direkt aufgenommen, an einer ersten Planfläche (8.2) angeschlagen und mit einer Halteschraube (8.4) fixiert. Ebenso ist es denkbar, anstelle des einteiligen Hystereseringes (1.2) eine Gruppe von Hystereseringen (1.2) wie in Fig. 2 und Fig. 4 in der ersten Zentrierung (8.3) der ersten Vorrichtungsnabe (8.1) direkt aufzunehmen und mittels mehrerer Halteschrauben (8.4) zu fixieren.

Dabei ist zu beachten, dass die geometrische Reihenfolge der Hystereseringe (1.2) in der Justiervorrichtung (JV) und in der Hysteresekupplung (HK) gleich sein muss.

Die zweite Vorrichtungsbaugruppe (9) besteht aus einer zweiten Vorrichtungsnabe (9.1) mit einer zweiten Planfläche (9.2) und einer zweiten Zentrierung (9.3), auf der der einteilige Magnetring (2.4) über einen Spanndeckel (9.4) und Spannschrauben (9.5) reibschlüssig befestigt ist. Weiterhin ist die zweite Vorrichtungsbaugruppe (9) zur ersten Vorrichtungsbaugruppe (8) um die Rotationsachse (A) drehbar gelagert und in die Verschieberichtung (V) parallel zur Rotationsachse (A) axial verschiebbar.

Aus der Darstellung in **Detail K** sind weiterhin die axiale Länge (L1) des Hystereseringes (1.2) und die axiale Länge (L2) des Magnetringes (2.4) ersichtlich. Die Längen (L1) und (L2) sind im dargestellten Beispiel unterschiedlich groß, was für die Übertragung des Vorrichtungsmaßes (DV) in das Kupplungsmaß (DK) eine Umrechnung erforderlich macht.

Es wird folgender Ablauf für den Justiervorgang mit der Justiervorrichtung (JV) nach **Fig. 12** vorgeschlagen:

- Der Hysteresering (1.2) und der Magnetring (2.4) werden in die erste Vorrichtungsnabe (8.1) und in die zweite Vorrichtungsnabe (9.1) bis zur ersten und zweiten Planfläche (8.2, 9.2) eingesetzt und mit der Halteschraube (8.4) und den Spannschrauben (9.5) befestigt.

- Die erste Vorrichtungsbaugruppe (8) und die zweite Vorrichtungsbaugruppe (9) werden in eine axiale Position zueinander gebracht, bei der sich die in axialer Richtung unterschiedlich langen Hystereseringe (1.2) und Magnetringe (2.4) vollständig überdecken. Idealerweise liegen dabei die zweite Planfläche (9.2) der zweiten Vorrichtungsnabe (9.1) und die dritte Planfläche (8.5) des Hystereserings (1.2) in einer Ebene. Das Vorrichtungsmaß (DV) ist somit in diesem Zustand gleich "Null".

- Die zweite Vorrichtungsbaugruppe (9) wird um die Rotationsachse (A) in Rotation versetzt mit einer Drehzahl, die etwa der späteren Betriebsdrehzahl der Hysteresekupplung (HK) entspricht und es wird gleichzeitig über die Drehmomentmessvorrichtung (MV) mit der Messung des übertragenen Drehmoments begonnen. Das ermittelte Drehmoment beim Vorrichtungsmaß (DV) "Null" muss mindestens gleich groß oder idealerweise größer als das später in der Hysteresekupplung (HK) zu übertragende Drehmoment sein.

- Bei kontinuierlicher Rotation und Messung des übertragenen Drehmoments wird die zweite Vorrichtungsbaugruppe (9) in Verschieberichtung (V) parallel zur Rotationsachse (A) zur ersten Vorrichtungsbaugruppe (8) hin bewegt, bis bei der Messung der gewünschte Drehmomentwert angezeigt wird. Bei diesem Drehmomentwert wird das Vorrichtungsmaß (DV) ermittelt.

- Bei der Hysterskupplung (HK) entsprechend Fig. 10 muss das Vorrichtungsmaß (DV) in das entsprechende Kupplungsmaß (DK) umgerechnet werden nach der Gleichung:

$$DK = DV + L2 - L1$$

Auch hier ist es für die Drehmomentgenauigkeit wichtig, die Lage von Hysteresering (1.2) und Magnetring (2.4) von der Justiervorrichtung (JV) in die Hysteresekupplung (HK) direkt zu übernehmen.

Zur Montage einer Hysterskupplung (HK) gemäß Fig. 10 wird folgende vorteilhafte Vorgehensweise vorgeschlagen:

- Hysteresering (1.2) und Magnetring (2.4) werden aus der Justiervorrichtung (JV) entnommen.

- Der Magnetring (2.4) wird bis zu dessen Anlage am zweiten Nabenbund (2.11) auf das zweite Nabenteil (2.1) aufgeschoben und vorzugsweise durch eine Klebeverbindung fixiert. Bei günstiger geometrischer Gestaltung der Bauteile liegt das Ende des Magnetringes (2.4) dann in einer Ebene mit dem zweiten Nabenende (2.9).

- Anschließend wird der Hysteresering (1.2) bis zum Kupplungsmaß (DK) über den ersten Toleranzring (1.6) hinweg in das erste Nabenteil (1.1) eingepresst, bis zwischen Hysteresering (1.2) und erster Anschlagfläche (1.5) ein Abstand in Höhe des Kupplungsmaßes (DK) erreicht ist. Dazu ist es zweckmäßig, zwischen dem Hysteresering (1.2) und der ersten Anschlagfläche (1.5) des ersten Nabenteils (1.1) ein Anschlagmittel mit einer dem Kupplungsmaß (DK) entsprechenden axialen Länge einzulegen.

- Abschließend können die erste und die zweite Nabenbaugruppe (1, 2) über das Kupplungslager (5) verbunden werden und das Dichtelement (7) wird auf das zweite Nabenteil (2.1) aufgeschraubt und verklebt. Ebenso ist es denkbar, das Dichtelement auf einen zylindrischen Vorsprung des zweiten Nabenteiles (2.1) aufzupressen.

Als signifikantes Merkmal von Hysteresekupplungen oder -bremsen gemäß Fig. 10 und Fig. 11, die unterschiedliche Längen (L1) und (L2) aufweisen und die einen wie anhand Fig. 12 beschriebenen Justiervorgang durchlaufen, gilt ein Vorrichtungsmaß (DV) oder Kupplungsmaß (DK), das so bemessen ist, dass auch hier keines der beiden Bauteile Hysteresering (1.2) oder Magnetring (2.4) vom anderen in axialer Richtung vollständig überdeckt wird. Dadurch wird auch bei Kupplungen mit unterschiedlichen Längen (L1) und (L2) mit ausreichender Sicherheit das gewünschte Drehmoment erreicht.

## Bezugszeichenliste

| | |
|---|---|
| 1 | Erste Nabenbaugruppe |
| 1.1 | Erstes Nabenteil |
| 1.2 | Hysteresering |
| 1.3 | Antriebsflansch |
| 1.4 | Flanschgewinde |
| 1.5 | Erste Anschlagfläche |
| 1.6 | Erster Toleranzring |
| | |
| 2 | Zweite Nabenbaugruppe |
| 2.1 | Zweites Nabenteil |
| 2.2 | Antriebsbohrung |
| 2.3 | Antriebsgewinde |
| 2.4 | Magnetring |
| 2.5 | Magnetträger |
| 2.6 | Magnetquader |
| 2.7 | Nabengewinde |
| 2.8 | Anschlagring |
| 2.9 | Zweites Nabenende |
| 2.10 | Zweiter Toleranzring |
| 2.11 | Zweiter Nabenbund |
| | |
| 3 | Lagerbolzen |
| 4 | Bolzenschraube |
| 5 | Kupplungslager |
| 6 | Lagerdeckel |
| 7 | Dichtelement |
| 8 | Erste Vorrichtungsbaugruppe |
| 8.1 | Erste Vorrichtungsnabe |

| | |
|---|---|
| 8.2 | Erste Planfläche |
| 8.3 | Erste Zentrierung |
| 8.4 | Halteschraube |
| 8.5 | Dritte Planfläche |
| 9 | Zweite Vorrichtungsbaugruppe |
| 9.1 | Zweite Vorrichtungsnabe |
| 9.2 | Zweite Planfläche |
| 9.3 | Zweite Zentrierung |
| 9.4 | Spanndeckel |
| 9.5 | Spannschraube |
| A | Rotationsachse |
| HK | Hysteresekupplung |
| JV | Justiervorrichtung |
| MV | Drehmomentmessvorrichtung |
| DV | Vorrichtungsmaß |
| DK | Kupplungsmaß |
| L1 | Gesamtlänge der Hystereringe (1.2) |
| L2 | Länge des Magnetringes (2.4) oder der Magnetquader (2.6) |
| V | Verschieberichtung |

## Patentansprüche

1. Hysteresekupplung oder -bremse bestehend aus einer ersten Nabenbaugruppe (1), die mit mindestens einem fest eingebauten Hysteresering (1.2) bestückt ist und

   aus einer zweiten Nabenbaugruppe (2), welche konzentrisch zur ersten Nabenbaugruppe (1) drehbar gelagert, in axialer Richtung fixiert angeordnet und mit einem fest eingebauten, mit Magnetquadern (2.6) bestückten Magnetträger (2.5) oder einem Magnetring (2.4.) bestückt ist, wobei sich zwischen dem mindestens einen Hysteresering (1.2.) und den Magnetquadern (2.6) bzw. dem Magnetring (2.4) ein ringförmiger Luftspalt ausbildet,

   wobei durch die axiale Fixierung zwischen der ersten und der zweiten Nabenbaugruppe (1, 2) eine feste axiale Überdeckung zwischen dem mindestens einen Hysteresering (1.2) und den Magnetquadern (2.6) bzw. dem Magnetring (2.4) und somit ein festes übertragbares Drehmoment der Hysteresekupplung oder -bremse definiert ist,

   wobei nach der Befestigung des mindestens einen Hystereseringes (1.2) an der ersten Nabenbaugruppe (1) und der Magnetquader (2.6) bzw. des Magnetringes (2.4) an der zweiten Nabenbaugruppe (2) keines der Bauteile, d. h. der mindestens eine Hysteresering (1.2) einerseits und die Magnetquader (2.6) bzw. der Magnetring (2.4) andererseits, das jeweils andere Bauteil in axialer Richtung vollständig überdeckt, so dass ein vordefiniertes Schlupfdrehmoment der Kupplung oder Bremse erreicht wird, und wobei die erste Nabenbaugruppe (1) ein glockenförmig ausgebildetes erstes Nabenteil (1.1) umfasst,

   **dadurch gekennzeichnet, dass**

die zweite Nabenbaugruppe (2) ein ebenfalls glockenförmig ausgebildetes zweites Nabenteil (2.1) umfasst, das konzentrisch innerhalb der ersten Nabenbaugruppe (1) angeordnet ist, und dass die axiale Position des Magnetringes (2.4) bzw. des mit den Magnetquadern (2.6) bestückten Magnetträgers (2.5) auf dem zweiten Nabenteil (2.1) durch ein auf einem Nabengewinde des zweiten Nabenteils aufgeschraubtes und auf dem Nabengewinde fest verbundenes Dicht- und Anschlagelement (7) definiert ist, indem der Magnetring (2.4) bzw. der Magnetträger (2.5) bis zum Anschlag auf das Anschlag- und Dichtelement (7) aufgeschoben ist, und der Magnetring (2.4) oder der mit den Magnetquadern (2.6) bestückte Magnetträger (2.5) mit dem zweiten Nabenteil (2.1) stoffschlüssig verbunden ist, wobei das Dicht- und Anschlagelement (7) mit dem ersten Nabenteil einen konzentrischen Dichtspalt bildet.

2. Hysteresekupplung oder -bremse gemäß Anspruch 1, **dadurch gekennzeichnet, dass** in der ersten Nabenbaugruppe (1) mehrere Hystereseringe (1.2) axial hintereinander angeordnet sind.

3. Hysteresekupplung oder -bremse gemäß Anspruch 1, **dadurch gekennzeichnet, dass** in der ersten Nabenbaugruppe (1) ein einziger Hysteresering (1.2) angeordnet ist.

4. Hysteresekupplung oder -bremse gemäß mindestens einem der Ansprüche 1 bis 3, **dadurch gekennzeichnet, dass** auf der zweiten Nabenbaugruppe (2) der eine Magnetträger (2.5) oder mehrere Magnetträger (2.5) mit jeweils mehreren Magnetquadern (2.6) mit in Umfangsrichtung abwechselnder radial gerichteter Nord- und Süd-Polung angeordnet sind.

5. Hysteresekupplung oder -bremse gemäß mindestens einem der Ansprüche 1 bis 3, **dadurch gekennzeichnet, dass** auf der zweiten Nabenbaugruppe (2) der eine Magnetring (2.4) oder mehrere durchgehende Magnetringe (2.4) mit in Umfangsrichtung abwechselnder radial gerichteter Nord- und Süd-Polung angeordnet sind.

6. Hysteresekupplung oder -bremse gemäß mindestens einem der Ansprüche 1 bis 5, wobei die beiden Nabenbaugruppen (1,2) über ein auf einem Lagerbolzen (3) fixiertes Kupplungslager (5) um die Rotationsachse (A) drehbar zueinander gelagert sind, **dadurch gekennzeichnet, dass** das erste Nabenteil (1.1) und der Lagerbolzen (3) einteilig vorzugsweise aus einem Leichtmetall ausgeführt sind.

7. Hysteresekupplung oder -bremse gemäß mindestens einem der Ansprüche 1 bis 5, wobei die beiden Nabenbaugruppen (1,2) über ein auf einem Lagerbolzen (3) fixiertes Kupplungslager (5) um die Rotationsachse (A) drehbar zueinander gelagert sind, **dadurch gekennzeichnet, dass** das erste Nabenteil (1.1) und der Lagerbolzen (3) zweiteilig ausgeführt sind, wobei der Lagerbolzen (3) durch eine Schraubverbindung mit dem ersten Nabenteil (1.1) verbunden ist und wobei der Lagerbolzen aus einem Stahlwerkstoff besteht.

8. Hysteresekupplung oder -bremse gemäß mindestens einem der Ansprüche 1 bis 7, **dadurch gekennzeichnet, dass** die erste Nabenbaugruppe (1) und die zweite Nabenbaugruppe (2) so zueinander angeordnet sind, dass eine erste Anschlagfläche (1.5) des ersten Nabenteils (1.1) mit einem zweiten Nabenende (2.9) eines zweiten Nabenteils (2.1) in einer Ebene liegt.

9. Hysteresekupplung oder -bremse gemäß mindestens einem der Ansprüche 1 bis 8, **dadurch gekennzeichnet, dass** die Gesamtheit der Hystereseringe (1.2) eine axiale Länge (L1) aufweist, die gleich der axialen Länge (L2) des Magnetringes (2.4) oder der Magnetquader (2.6) ist.

10. Hysteresekupplung oder -bremse gemäß mindestens einem der Ansprüche 1 bis 8, **dadurch gekennzeichnet, dass** die Gesamtheit der Hystereseringe (1.2) eine axiale Länge (L1) aufweist, die sich von der axialen Länge (L2) des Magnetringes (2.4) oder der Magnetquader (2.6) unterscheidet.

11. Verfahren zur Justierung und Montage einer Hysteresekupplung oder - bremse nach Anspruch 1, bei dem:

    - in einer aus einer ersten Vorrichtungsbaugruppe (8) und einer zweiten Vorrichtungsbaugruppe (9) bestehenden Justiervorrichtung (JV) direkt mit dem mindestens einen in der Hysteresekupplung oder -bremse (HK) verwendeten Hysteresering (1.2) und dem Magnetring (2.4) bzw. den Magnetquadern (2.6) ein einem gewünschten Drehmoment entsprechendes Vorrichtungsmaß (DV) ermittelt wird, indem die zweite Vorrichtungsbaugruppe (9) um eine Rotationsachse (A) rotiert wird und gleichzeitig eine axiale Bewegung in eine Verschieberichtung (V) parallel zur Rotationsachse (A) ausgeführt wird, während über die erste ortsfeste Vorrichtungsbaugruppe (8) mit einer Drehmomentmessvorrichtung (MV) ein Drehmoment gemessen wird, wonach das Vorrichtungsmaß (DV) direkt oder nach geeigneter Umrechnung als Kupplungsmaß (DK) auf die Hyteresekupplung (HK) übertragen wird,
    - der mindestens eine Hysteresering (1.2) und der Magnetring (2.4) bzw. der Magnetträger (2.5) aus der Justiervorrichtung (JV) entnommen werden,

- das Dicht- und Anschlagelement (7) in einem Abstand von einem Nabenende (2.9) des zweiten Nabenteils (2.1) auf das Nabengewinde (2.7) des zweiten Nabenteils (2.1) aufgeschraubt und fest verbunden wird, wobei der Abstand der Länge des Magnetringes (L2) zuzüglich des Kupplungsmaßes (DK) entspricht,

- der Magnetring (2.4) bzw. der Magnetträger (2.5) anschließend bis zum Anschlag auf das Anschlag- und Dichtelement (7) auf das zweite Nabenteil (2.1) aufgeschoben und stoffschlüssig verbunden wird, und

- durch das Dicht- und Anschlagelement (7) und das erste Nabenteil (1.1) ein konzentrischer Dichtspalt gebildet wird.

**12.** Verfahren gemäß Anspruch 11, **dadurch gekennzeichnet, dass** der mindestens eine Hysteresering (1.2) und/oder der Magnetring (2.4) direkt in die Vorrichtungsbaugruppen (8, 9) eingesetzt werden.

**13.** Verfahren gemäß Anspruch 11, **dadurch gekennzeichnet, dass** das erste Nabenteil (1.1) mit darin fixiertem Hysteresering oder darin fixierten Hystereseringen (1.2) und/oder der eine Magnetträger (2.5) mit den darauf befestigten Magnetquadern (2.6) in die Vorrichtungsbaugruppen (8, 9) eingesetzt werden.

**14.** Verfahren nach mindestens einem der Ansprüche 11 bis 13, **dadurch gekennzeichnet, dass** anhand des in der Justiervorrichtung (JV) ermittelten Vorrichtungsmaßes (DV) das Kupplungsmaß (DK) definiert wird, anhand dessen die endgültige axiale Position des Magnetringes (2.4) oder des mit Magnetquadern (2.6) bestückten Magnetträgers (2.5) in der Hysteresekupplung (HK) fixiert wird.

**Claims**

**1.** Hysteresis clutch or brake consisting of:

a first hub assembly (1) which is equipped with at least one fixed hysteresis ring (1.2) and a second hub assembly (2), which is rotatably mounted concentrically to the first hub assembly (1), arranged fixed in the axial direction and equipped with a fixedly built in magnet carrier (2.5) furnished with block magnets (2.6) or with a magnetic ring (2.4.), wherein an annular air gap is formed between the at least one hysteresis ring (1.2.) and the block magnetics (2.6) or the magnetic ring (2.4),

wherein by the axial fixation between the first and the second hub assembly (1, 2) defines a fixed axial overlap between the at least one hysteresis ring (1.2) and the block magnets (2.6) or the magnet ring (2.4) and thereby a fixed transferable torque of the hysteresis clutch or brake, wherein after the attachment of the at least one hysteresis ring (1.2) to the first hub assembly (1) and the block magnets (2.6) or the magnet ring (2.4) to the second hub assembly (2) none of the components, that is to say the at least one hysteresis ring (1.2) on the one hand and the block magnets (2.6) or magnet ring (2.4) on the other hand, completely covers the other component in the axial direction thus achieving a predefined slip torque of the clutch or brake, and wherein

the first hub assembly (1) comprises a bell-shaped first hub part (1.1),

**characterized in that**

the second hub assembly (2) comprises a likewise bell-shaped second hub part (2.1), which is arranged concentrically within the first hub assembly (1), and that the axial position of the magnetic ring (2.4) or of the block magnets (2.6) equipped magnetic carrier (2.5) on the second hub part (2.1) is defined by a sealing and stop element (7) screwed to a thread of the second hub part and fixedly attached thereto wherein the magnetic ring (2.4) or the magnetic carrier (2.5) is pushed to the stop of the stop and sealing element (7), and the magnetic ring (2.4) or the block magnets (2.6) equipped magnetic carrier (2.5) is firmly bonded with the second hub part (2.1),

wherein the sealing and stop element (7) forms a concentric seal gap with the first hub part.

**2.** Hysteresis clutch or brake according to claim 1, **characterized in that** in the first hub assembly (1) a plurality of hysteresis rings (1.2) are arranged axially one behind the other.

**3.** Hysteresis clutch or brake according to claim 1, **characterized in that** in the first hub assembly (1) a single hysteresis ring (1.2) is arranged.

**4.** Hysteresis clutch or brake according to at least one of claims 1 to 3, **characterized in that** on the second hub assembly (2) having one magnetic carrier (2.5) or more magnetic carriers (2.5), each respectively having a plurality of block magnets (2.6) arranged in the circumferential direction having alternately radially directed north and south polarity.

**5.** Hysteresis clutch or brake according to at least one of claims 1 to 3, **characterized in that** on the second hub assembly (2) the one magnetic ring (2.4) or more continuous magnetic rings (2.4) are arranged with circumferentially alternating radially directed north and south polarity.

6. Hysteresis clutch or brake according to at least one of claims 1 to 5, wherein the two hub assemblies (1,2) are rotatably mounted to each other about the rotation axis (A) by means of a coupling bearing (5) fixed to a bearing pin (3), **characterized in that** the first hub part (1.1) and the bearing pin (3) are made of one piece preferably of a light metal.

7. Hysteresis clutch or brake according to at least one of claims 1 to 5, wherein the two hub assemblies (1,2) are rotatably mounted to each other about the rotation axis (A) by means of a coupling bearing (5) fixed to a bearing pin (3), **characterized in that** the first hub part (1.1) and the bearing pin (3) are made in two parts, wherein the bearing pin (3) is connected by a screw connection to the first hub part (1.1) and wherein the bearing pin consists of a steel material.

8. Hysteresis clutch or brake according to at least one of claims 1 to 7, **characterized in that** the first hub assembly (1) and the second hub assembly (2) are arranged in respect of each other such that a first stop surface (1.5) of the first hub portion (1.1) and a second hub end (2.9) of a second hub part (2.1) lie in one plane.

9. Hysteresis clutch or brake according to at least one of claims 1 to 8, **characterized in that** the entirety of the hysteresis rings (1.2) has an axial length (L1) equal to the axial length (L2) of the magnetic ring (2.4) or the block magnets (2.6).

10. Hysteresis clutch or brake according to at least one of claims 1 to 8, **characterized in that** the entirety of the hysterese rings (1.2) has an axial length (L1), differing from the axial length (L2) of the magnetic ring (2.4) or the block magnets (2.6).

11. A method of adjusting and mounting a hysteresis clutch or brake according to claim 1, wherein:

in an adjustment device (JV) consisting of a first device assembly (8) and a second device assembly (9), a device dimension (DV) of the at least one hysteresis ring (1.2) used in the hysteresis clutch or brake (HK) and the magnet ring (2.4) or the block magnets (2.6) corresponding to a desired torque is determined by:

rotating the second device assembly (9) about a rotation axis (A) and at the same time carrying out an axial movement in a direction of displacement (V) parallel to the axis of rotation (A), meanwhile measuring a torque via the first stationary device assembly (8) with a torque measuring device (MV), after which the device dimension (DV) is transferred directly or, after suitable conversion to a coupling dimension (DK), to the hysteresis clutch (HK),

- the at least one hysteresis ring (1.2) and the magnetic ring (2.4) or the magnetic carrier (2.5) are removed from the adjustment device (JV),
- the sealing and stop element (7) is screwed and firmly connected on the hub thread (2.7) of the second hub part (2.1) at a distance from a hub end (2.9) corresponding to the distance of the length of the magnetic ring (L2) plus the coupling dimension (DK),
- the magnetic ring (2.4) or the magnetic carrier (2.5) then pushed to the stopthe stop of and sealing element (7) on the second hub part (2.1) and firmly bonded, and
- a concentric sealing gap is formed from the sealing and stop element (7) and the first hub part (1.1).

12. The method according to claim 11, **characterized in that** the at least one hysteresis ring (1.2) and/or the magnetic ring (2.4) is implemented directly in the device assemblies (8, 9).

13. Method according to claim 11, **characterized in that** the first hub part (1.1) with hysteresis ring fixed therein or hysteresis rings (1.2) fixed therein and/or the one magnet carrier (2.5) with the block magnets (2.6) fixed therein are implemented in the device assemblies (8, 9).

14. The method according to at least one of claims 11 to 13, **characterized in that** based on the device dimension (DV) determined in the adjusting device (JV) the coupling dimension (DK) is defined, based on which the final axial position within the hysteresis clutch (HK) of the magnetic ring (2.4) or the magnetic carrier (2.5) adorned with block magnets (2.6) is fixed.

**Revendications**

1. Accouplement ou frein à hystérésis composé d'un premier ensemble formant moyeu (1) qui est équipé d'au moins un anneau d'hystérésis encastré (1.2), et d'un deuxième ensemble formant moyeu (2) qui est monté à rotation concentriquement par rapport au premier ensemble formant moyeu (1), qui est disposé en étant fixe dans la direction axiale et qui est équipé d'un support d'aimant (2.5) encastré équipé de blocs magnétiques (2.6), ou d'un anneau magnétique (2.4), dans lequel il se forme entre le au moins un anneau d'hystérésis (1.2) et les blocs magnétiques (2.6) ou l'anneau magnétique (2.4) un entrefer annulaire,

dans lequel un recouvrement axial fixe entre le au moins un anneau d'hystérésis (1.2) et les blocs magnétiques (2.6) ou l'anneau magnétique (2.4) est défini entre les premier et deuxième ensembles formant moyeux (1, 2) par la fixation axiale et, ainsi, un couple transmissible fixe de l'accouplement ou du frein à hystérésis,

dans lequel après la fixation du au moins un anneau d'hystérésis (1.2) au premier ensemble formant moyeu (1) et du bloc magnétique (2.6) ou de l'anneau magnétique (2.4) au deuxième ensemble formant moyeu (2), aucun des composants, c'est-à-dire le au moins un anneau d'hystérésis (1.2) d'une part et les blocs magnétiques (2.6) ou l'anneau magnétique (2.4) d'autre part, ne couvre entièrement l'autre composant dans la direction axiale, de sorte qu'on obtient un couple de glissement prédéfini de l'accouplement ou du frein,

et dans lequel le premier ensemble formant moyeu (1) comprend un premier élément de moyeu (1.1) en forme de cloche,

**caractérisé en ce que** le deuxième ensemble formant moyeu (2) comprend un deuxième élément de moyeu (2.1) également en forme de cloche, qui est disposé concentriquement à l'intérieur du premier ensemble formant moyeu (1), et

**en ce que** la position axiale de l'anneau magnétique (2.4) ou du support d'aimant (2.5) équipé des blocs magnétiques (2.6) sur le deuxième élément de moyeu (2.1) est définie par un élément d'étanchéité et de butée (7) vissé sur un filetage de moyeu du deuxième élément de moyeu et relié solidement sur le filetage de moyeu, l'anneau magnétique (2.4) ou le support d'aimant (2.5) étant glissé jusqu'à la butée sur l'élément de butée et d'étanchéité (7), et l'anneau magnétique (2.4) ou le support d'aimant (2.5) équipé des blocs magnétiques (2.6) étant relié d'un seul tenant au deuxième élément de moyeu (2.1),

dans lequel l'élément d'étanchéité et de butée (7) forme avec le premier élément de moyeu un interstice d'étanchéité concentrique.

2. Accouplement ou frein à hystérésis selon la revendication 1, **caractérisé en ce que** dans le premier ensemble formant moyeu (1), plusieurs anneaux d'hystérésis (1.2) sont disposés axialement les uns derrière les autres.

3. Accouplement ou frein à hystérésis selon la revendication 1, **caractérisé en ce que** dans le premier ensemble formant moyeu (1) est disposé un seul anneau d'hystérésis (1.2).

4. Accouplement ou frein à hystérésis selon l'une au moins des revendications 1 à 3, **caractérisé en ce que** sur le deuxième ensemble formant moyeu (2), le support d'aimant (2.5) ou plusieurs supports d'aimant (2.5) avec plusieurs blocs magnétiques (2.6) chacun sont disposés avec des polarités nord et sud orientées radialement en alternance dans le sens circonférentiel.

5. Accouplement ou frein à hystérésis selon l'une au moins des revendications 1 à 3, **caractérisé en ce que** sur le deuxième ensemble formant moyeu (2), l'anneau magnétique (2.4) ou plusieurs anneaux magnétiques continus (2.4) sont disposés avec des polarités nord et sud orientées radialement en alternance dans le sens circonférentiel.

6. Accouplement ou frein à hystérésis selon l'une au moins des revendications 1 à 5, dans lequel les deux ensembles formant moyeux (1, 2) sont montés pivotants l'un par rapport à l'autre autour de l'axe de rotation (A) par un palier d'accouplement (5) fixé sur un tourillon (3), **caractérisé en ce que** le premier élément de moyeu (1.1) et le tourillon (3) sont réalisés en une seule partie, de préférence dans un métal léger.

7. Accouplement ou frein à hystérésis selon l'une au moins des revendications 1 à 5, dans lequel les deux ensembles formant moyeux (1, 2) sont montés pivotants l'un par rapport à l'autre autour de l'axe de rotation (A) par un palier d'accouplement (5) fixé sur un tourillon (3), **caractérisé en ce que** le premier élément de moyeu (1.1) et le tourillon (3) sont réalisés en deux parties, dans lequel le tourillon (3) est relié par une liaison à vis au premier élément de moyeu (1.1), et dans lequel le tourillon est en matériau d'acier.

8. Accouplement ou frein à hystérésis selon l'une au moins des revendications 1 à 7, **caractérisé en ce que** le premier ensemble formant moyeu (1) et le deuxième ensemble formant moyeu (2) sont disposés l'un par rapport à l'autre de telle sorte qu'une première surface de butée (1.5) du premier élément de moyeu (1.1) se trouve dans le même plan qu'une deuxième extrémité (2.9) d'un deuxième élément de moyeu (2.1).

9. Accouplement ou frein à hystérésis selon l'une au moins des revendications 1 à 8, **caractérisé en ce que** la totalité des anneaux d'hystérésis (1.2) présente une longueur axiale (L1) qui est égale à la longueur axiale (L2) de l'anneau magnétique (2.4) ou des blocs magnétiques (2.6).

**10.** Accouplement ou frein à hystérésis selon l'une au moins des revendications 1 à 8, **caractérisé en ce que** la totalité des anneaux d'hystérésis (1.2) présente une longueur axiale (L1) qui est différente de la longueur axiale (L2) de l'anneau magnétique (2.4) ou des blocs magnétiques (2.6).

**11.** Procédé pour l'ajustement et le montage d'un accouplement ou frein à hystérésis selon la revendication 1, dans lequel :

- dans un dispositif d'ajustement (JV) composé d'un premier ensemble formant dispositif (8) et d'un deuxième ensemble formant dispositif (9), on détermine une mesure de dispositif (DV) correspondant à un couple souhaité, directement avec le au moins un anneau d'hystérésis (1.2) utilisé dans l'accouplement ou frein à hystérésis (HK) et l'anneau magnétique (2.4) ou les blocs magnétiques (2.4),
en faisant tourner le deuxième ensemble formant dispositif (9) autour d'un axe de rotation (A) et en décrivant en même temps un mouvement axial dans une direction de déplacement (V) parallèle à l'axe de rotation (A),
pendant qu'un couple est mesuré par le premier ensemble formant dispositif stationnaire (8) avec un dispositif de mesure de couple (MV), après quoi la mesure de dispositif (DV) est transmise comme mesure d'accouplement (DK) à l'accouplement à hystérésis (HK), directement ou après une conversion appropriée,
- on enlève du dispositif d'ajustement (JV) le au moins un anneau d'hystérésis (1.2) et l'anneau magnétique (2.4) ou le support d'aimant (2.5),
- on visse et on relie solidement l'élément d'étanchéité et de butée (7), à une distance d'une extrémité de moyeu (2.9) du deuxième élément de moyeu (2.1), sur le filetage de moyeu (2.7) du deuxième élément de moyeu (2.1), dans lequel la distance correspond à la longueur de l'anneau magnétique (L2) plus la mesure d'accouplement (DK),
- on glisse ensuite l'anneau magnétique (2.4) ou le support d'aimant (2.5) jusqu'à la butée sur l'élément de butée et d'étanchéité (7) sur le deuxième élément de moyeu (2.1) et on le relie d'un seul tenant, et
- une fente d'étanchéité concentrique est formée par l'élément d'étanchéité et de butée (7) et le premier élément de moyeu (1.1).

**12.** Procédé selon la revendication 11, **caractérisé en ce que** l'on introduit le au moins un anneau d'hystérésis (1.2) et/ou l'anneau magnétique (2.4) directement dans les ensembles formant dispositif (8, 9).

**13.** Procédé selon la revendication 11, **caractérisé en ce que** l'on introduit le premier élément de moyeu (1.1) avec un anneau d'hystérésis ou des anneaux d'hystérésis (1.2) fixés dans celui-ci et/ou le support d'aimant (2.5) avec les blocs magnétiques (2.6) fixés sur celui-ci dans les ensembles de dispositif (8, 9).

**14.** Procédé selon l'une au moins des revendications 11 à 13, **caractérisé en ce que** l'on définit à l'aide de la mesure de dispositif (DV) déterminée dans le dispositif d'ajustement (JV) la mesure d'accouplement (DK), à l'aide de laquelle on fixe la position axiale définitive de l'anneau magnétique (2.4) ou du support d'aimant (2.5) équipé de blocs magnétiques (2.6), dans l'accouplement à hystérésis (HK).

Fig. 1

Fig. 2

Fig. 3
(A-A)

Detail D

Fig. 4

Fig. 5
(B-B)

Detail E

EP 3 236 566 B1

Fig. 6

Detail F

JV, 1.2, 1.1, 9.5, F, 9, A, 9.1, 9.2, 9.3, 2.5, 1.3, 2.6, 9.4, MV

8.3, 8.1, 8, 8.4, 8.2

1.1, 1.2, 2.5, 2.6

L1, L2, DK, DV

DK=DV, wenn L1=L2

Fig. 7

Fig. 8
(C-C)

Detail G

C

HK
7
2
2.1
2.2
2.3
4
6
8.5

1.3
1.1
1
1.6
1.2
G
2.4
5
A
3

1.2
1.4
2.4
2.1

1.6
1.2
1.5
2.4
2.1
2.9

L1
L2
DV
DK

Fig. 9

Detail H

Fig. 10

Fig. 11
(D-D)

Detail J

EP 3 236 566 B1

EP 3 236 566 B1

Detail K

Fig. 12

23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1026815 B1
- DE 10313855 B4
- JP S6044482 U
- DE 102008053166